Europäisches Patentamt

European Patent Office

Office européen des brevets

(19)

(11) Veröffentlichungsnummer: **0 060 932**
B1

(12) **EUROPÄISCHE PATENTSCHRIFT**

(45) Veröffentlichungstag der Patentschrift:
01.06.88

(51) Int. Cl.⁴: **G 06 F 15/16**

(21) Anmeldenummer: **81109425.9**

(22) Anmeldetag: **30.10.81**

(54) Schaltungsanordnung mit zwei Mikrocomputern, die über einen Buskoppler miteinander verbunden sind.

(30) Priorität: **18.03.81 DE 3110576**

(43) Veröffentlichungstag der Anmeldung:
**29.09.82 Patentblatt 82/39**

(45) Bekanntmachung des Hinweises auf die Patenterteilung:
**01.06.88 Patentblatt 88/22**

(84) Benannte Vertragsstaaten:
**DE IT NL SE**

(56) Entgegenhaltungen:
**EP - A - 0 060 339**

**NTZ, Band 32, Heft 2, 1979, Seiten 96-98, Berlin, DE; N. BUDNIK: "Möglichkeiten des Einsatzes von Mikroprozessoren zur Übertragung von Fernwirktelegrammen"**
**ELEKTRONIK, Band 29, Nr. 20, Oktober 1980, Seiten 77-81, München, DE; K. ZWOLL u.a.: "PDV-Bus-Steuerwerk mit Doppelprozessor"**
**NACHRICHTENTECHNIK-ELEKTRONIK, Band 29, Heft 6, 1979, Seiten 229-232, Berlin, DD; W. CIMANDER u.a.: "Mehrmikrorechnersysteme mit Registerkopplung"**
**COMPCON 76, 13th IEEE COMPUTER SOCIETY INTERNATIONAL CONFERENCE, 7.-10. September 1976, Washington, D.C., Seiten 277-282, IEEE, New York, US; P.M. RUSSO: "An interface for multi-microcomputer systems"**

(73) Patentinhaber: **Siemens Aktiengesellschaft Berlin und München, Wittelsbacherplatz 2, D-8000 München 2 (DE)**

(72) Erfinder: **Herkert, Hans, Dipl.-Ing., Kurzweg 3, D-8021 Hohenschäftlarn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine wie im Oberbegriff des Patentanspruchs 1 angegebene Schaltungsanordnung mit zwei Mikrocomputern, die über einen Bus-Koppler miteinander verbunden sind.

Eine derartige Schaltungsanordnung ist z.B. aus N. Budnik: «Möglichkeiten des Einsatzes von Mikroprozessoren zur Übertragung von Fernwirktelegrammen», NTZ Bd. 32 (1979), Heft 2, Seiten 96–98 bekannt.

Bei der bekannten Schaltungsanordnung sind zwei Mikroprozessoren vorgesehen, von denen der eine zur Telegrammerzeugung und -auswertung und der andere zur Datenverarbeitung dient. Die beiden Mikrocomputer tauschen über einen Bus-Koppler Daten aus. Dieser Bus-Koppler ist Teilnehmer zweier Busse und kann der aufwendigste Teil der ganzen Schaltungsanordnung sein, da er sehr viele Vorschriften und Zeitbedingungen beachten muss.

Aufgabe der Erfindung ist es, eine wie im Oberbegriff des Patentanspruchs 1 angegebene Schaltungsanordnung verart auszubilden, dass sich eine konfliktfreie Zusammenarbeit beider Mikrocomputer bei möglichst geringem Aufwand ergibt.

Gemäss der Erfindung wird die Schaltungsanordnung zur Lösung dieser Aufgabe in der im kennzeichnenden Teil des Patentanspruchs 1 angegebenen Weise ausgebildet. Bei dem wortseriellen Datenaustausch wird eine zeitliche Folge von Wörtern, insbesondere Bytes, übertragen.

Eine derartige Schaltungsanordnung ermöglicht es in vorteilhafter Weise, dass der eine Mikrocomputer die Telegrammerzeugung und -auswertung ausführt, während der andere Mikrocomputer als programmierbare Peripherieeinheit des erstgenannten Mikrocomputers die Telegramminhalte empfängt und sie einer Programmvorschrift entsprechend als seriellen Bitstrom weitergibt und/oder einen geeigneten Bitstrom seriell empfängt und die darin enthaltene Information für den ersten Mikrocomputer zur Weitergabe in einem Fernwirktelegramm bereithält.

Beide Mikrocomputer können zu beliebigen Zeiten Fernwirktelegramme bzw. Daten empfangen oder aussenden, ohne dass der Datenaustausch dadurch beeinträchtigt würde.

Aus Nachrichtentechnik – Elektronik, Band 29, Heft 6, 1979, Seiten 229–232 ist bereits ein Mehrmikrorechnersystem mit Registerkopplung bekannt, bei dem ein Bus-Koppler für die Kopplung von mehreren Mikrocomputern vorgesehen ist. Dieser Bus-Koppler enthält als Pufferspeicher je Übertragungsrichtung ein Register mit Tristate-Ausgängen. Eine Erzeugung oder Auswertung von Fernwirktelegrammen ist dabei nicht vorgesehen.

Weitere Ausgestaltungen der Erfindung ergeben sich aus den Ansprüchen 2–7.

Durch die Massnahmen nach Anspruch 2 ergibt sich in vorteilhafter Weise eine Schaltungsanordnung, bei der sich Wortgruppen übertragen lassen, ohne das konfliktfreie Zusammenarbeiten der beiden Mikrocomputer zu beeinträchtigen.

Weiterhin kann man zwei Schaltungsanordnungen derart miteinander koppeln, dass die zur Datenspeicherung und/oder Datenverarbeitung dienenden Mikrocomputer an ihren für eine serielle Ein- und Ausgabe der Daten vorgesehenen Peripherie-Bausteinen miteinander verbunden sind.

Die in Anspruch 7 angegebene Anordnung lässt sich besonders vorteilhaft als Zentralstation in Fernwirkeinrichtungen anwenden, bei denen mehrere Bereichsnetze über Koppeleinrichtungen miteinander gekoppelt sind. In diesem Fall enthält die Zentralstation jeweils eine Zentrale eines Bereichsnetzes und eine Station eines weiteren Bereichsnetzes. Zentrale und Station sind über die Koppeleinrichtung miteinander verbunden. Von den vier Mikrocomputern der Zentralstation stellen die zur Erzeugung und Auswertung von Fernwirktelegrammen dienenden Mikrocomputer die Zentrale bzw. Station dar. Von den beiden anderen Mikrocomputern dient der eine als Datenspeicher der Zentrale, der andere als Datenspeicher der Station.

Die Erfindung wird anhand der in den Figuren dargestellten Ausführungsbeispiele näher erläutert.

Es zeigen

Fig. 1 eine Schaltungsanordnung mit zwei Mikrocomputern und einem Pufferspeicher, der je Mikrocomputer und Übertragungseinrichtung ein Register enthält,

Fig. 2 eine Schaltungsanordnung mit zwei Mikrocomputern und einem Pufferspeicher mit einem Register je Übertragungsrichtung,

Fig. 3 eine Schaltungsanordnung mit zwei Mikrocomputern und einem Pufferspeicher, der je Mikrocomputer ein umsteuerbares Register enthält,

Fig. 4 den Aufbau des Fernwirktelegrammes, das von und zur Fernleitung übertragen wird,

Fig. 5 den zeitlichen Ablauf, in dem byte- oder wortserielle Telegramminhalte vom einen Mikrocomputer zum anderen und in umgekehrter Richtung übertragen werden und

Fig. 6 den Aufbau der bitseriellen Telegramme, die von und zum Prozessrechner oder von und zu Ein-/Ausgabe-Elementen übertragen werden.

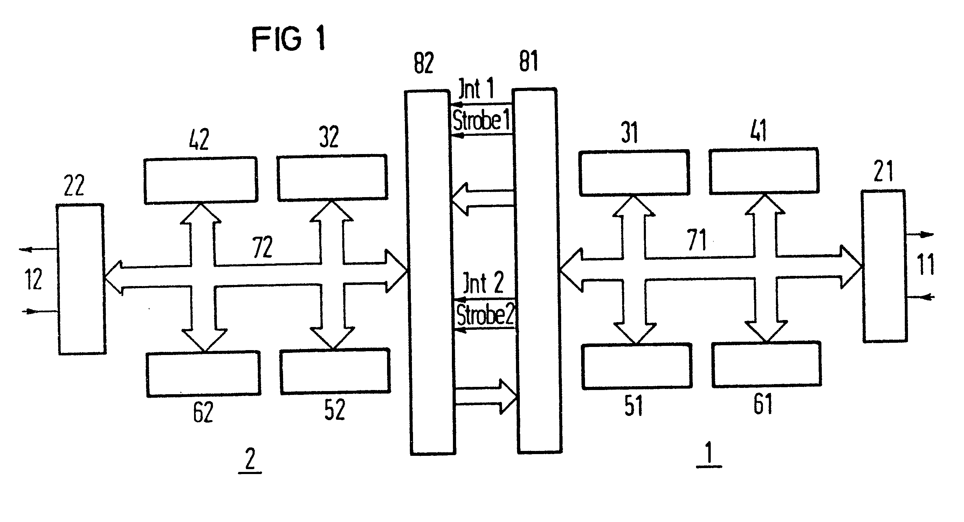

Fig. 1 zeigt den Aufbau einer Zentrale oder Station eines Fernwirksystems mit zwei Mikrocomputern, wobei der Mikrocomputer 1 als Ablaufsteuerung die Telegramme auf seiten der Fernleitung 11 seriell sendet, empfängt und auswertet, der Mikrocomputer 2 die Daten der Telegramme speichert und sie über die Leitung 12 ebenfalls seriell an wenigstens ein in der Figur nicht dargestelltes Peripheriegerät, insbesondere an einen Prozessrechner weitergibt oder Daten vom Peripheriegerät seriell empfängt und sie für den Mikrocomputer 1 zum Aussenden als Fernwirktelegramm bereithält.

Der Mikrocomputer 1 enthält den Programmspeicher 41, den Timer 31, den Datenspeicher 61 und den Mikroprozessor 51, die an den Bus 71 angeschlossen sind. Der Mikrocomputer 2 enthält

den Programmspeicher 42, den Timer 32, den Datenspeicher 62 und den Mikroprozessor 52, die am Bus 72 liegen.

Die Mikrocomputer 1 und 2 können in vorteilhafter Weise, beide für sich, für ihre speziellen Aufgaben programmiert werden. Insbesondere führt der Mikrocomputer 1 irgendeinen Telegrammaustausch mit anderen Stationen durch; der Mikrocomputer 2 verarbeitet die Daten von dem Peripheriegerät oder vom Mikrocomputer 1 und gibt sie nach einer bestimmten Prozedur weiter.

Der Datenaustausch zwischen den beiden Mikrocomputern 1 und 2 erfolgt so, dass der serielle Daten- bzw. Telegrammfluss an den seriellen Schnittstellen der Mikrocomputer nicht gestört wird. Der Mikrocomputer 1 bestimmt den Zeitpunkt des Datenaustausches zwischen den Mikrocomputern 1 und 2. Die Daten werden byte- oder wortweise und in definierten Blöcken von mehreren Bytes übergeben. Da der Zeitpunkt der Datenabgabe und -annahme vom Mikrocomputer 1 bestimmt wird, haben die Interrupte Int1 und Int2 Priorität vor allen Interrupten des Mikrocomputers 2. Ausserdem ist der Mikrocomputer 2 nach Auftreten eines Interruptes Int1 oder Int2 innerhalb einer bestimmten Zeit bereit, die Datenblöcke vom Mikrocomputer 1 anzunehmen oder an den Mikrocomputer 1 abzugeben.

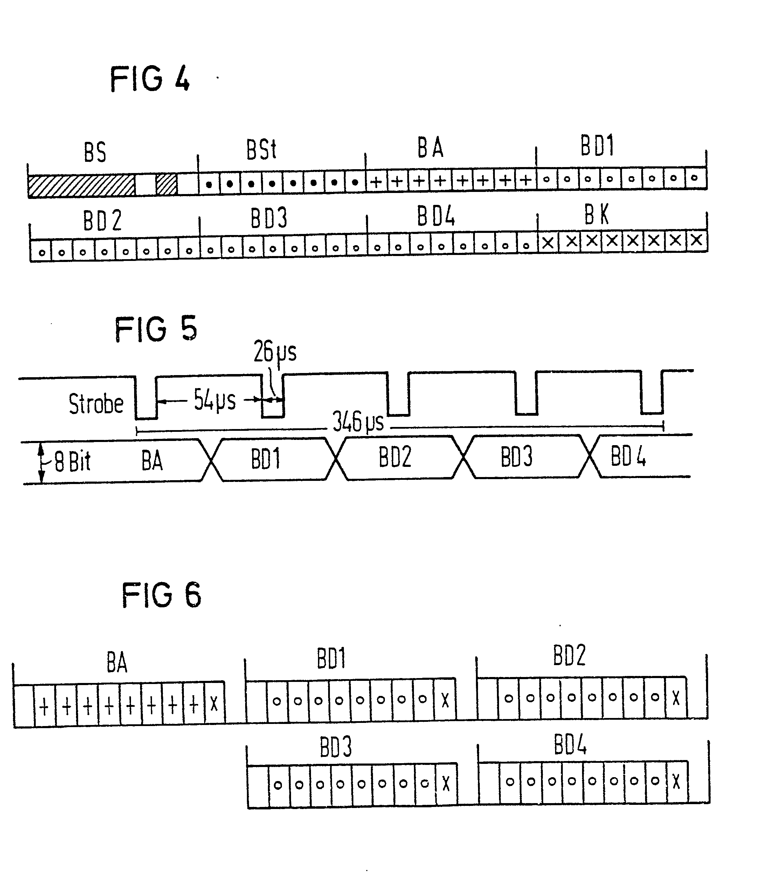

Von der Fernleitung bzw. Leitung 11 kommt ein serielles Fernwirktelegramm entweder asynchron, wobei jedes Byte in einem Anlauf und Trennschritt verpackt ist oder entsprechend Fig. 4 synchron mit einem Datenblock von acht Bytes, der mit einem Synchronbyte BS beginnt und mit einem Byte BK für die Fehlerkontrolle endet.

Der Peripherie-Baustein 21, z.B. vom Typ SAB 8251, dient als Serien-Parallelumsetzer. Er speichert das einlaufende Byte und bietet es parallel dem Prozessor 51 des Mikrocomputers 1 an, während das nächste Byte einläuft und zwischengespeichert wird. Ist das letztgenannte Byte eingelaufen, überschreibt es das vorhergehende Byte. Der Prozessor 51 im Mikrocomputer 1 muss also das n-te parallel anliegende Byte abholen, solange das n+1-te Byte einläuft, sonst wird es überschrieben. Die Zeit des Einlaufens beträgt bei einer Bitrate von 2400 Bit/s etwa 4,6 ms.

Die im Mikrocomputer 1 gespeicherten Adress- und Datenbytes eines Telegramms werden auf Parity-Fehler und/oder über das Kontrollbyte auf Bitfehler untersucht. Bei Fehlerfreiheit ruft der Mikrocomputer 1 über Interrupt Int1 den Mikrocomputer 2 auf und gibt die fünf Bytes nacheinander, jedes Byte mit einem Stroboimpuls Strobe1 versehen, über den Peripherie-Baustein 81 des Mikrocomputers 1, z.B. vom Typ SAB 8255, an den Peripherie-Baustein 82 des Mikrocomputers 2, im genannten Beispiel ebenfalls vom Typ SAB 8255.

Mit dem Stroboimpuls wird das am Peripherie-Baustein 81 anliegende Byte in den Peripherie-Baustein 82 gespeichert und gibt für den Prozessor 62 des Mikrocomputers 2 einen Interrupt aus, der bis zum nächsten Stroboimpuls S1 bedient werden muss, sonst wird das gespeicherte Byte vom nächsten Byte überschrieben.

Hat der Mikrocomputer 2 entsprechend Fig. 5 nach ca. 346 µs alle fünf Bytes angenommen, so gibt er sie mit Hilfe des Peripherie-Bausteins 22 seriell an das Peripheriegerät weiter.

Der Peripherie-Baustein 22 gibt die Daten wie in Fig. 6 gezeigt an das Peripheriegerät weiter. Dabei bedeutet x ein Parity-Bit und o ein Informationsbit.

Während der Peripherie-Baustein 22 die Daten an das Peripheriegerät weitergibt, kann über Interrupt Int2 vom Mikrocomputer 1 an den Mikrocomputer 2 eine Anforderung nach Datenübergabe an den Mikrocomputer 1 gestellt werden. Hat der Mikrocomputer 2 keine Daten abzugeben, dann legt er an den Peripherie-Baustein 81 des Mikrocomputers 1 ein vorgegebenes Byte, z.B. das Byte FF hexadezimal an. Der Mikrocomputer 1 erkennt dies und nimmt seine Byteanforderung zurück. Bietet der Mikrocomputer 2 jedoch ein Byte an, das nicht gleich FF hexadezimal ist, so nimmt es der Mikrocomputer 1 an und fordert mit den Stroboimpulsen Strobe2 die nächsten vier Bytes an. Diese insgesamt fünf Bytes sendet der Mikrocomputer 1 anschliessend in einem Telegrammrahmen als Fernwirktelegramm aus und fordert über Interrupt Int2 die nächsten fünf Bytes an. Gibt der Mikrocomputer 2 das vorgegebene Byte, z.B. FF ab, so wird die Anforderung beendet.

Während der Mikrocomputer 2 die Byteanforderung des Mikrocomputers 1 bedient, kann er gleichzeitig die Datenübergabeprozedur zum oder vom Peripheriegerät abwickeln, da die parallele Übergabe von fünf Bytes vom oder zum Mikrocomputer 1 schneller ist als die zeitliche Dauer eines vom oder zum Rechner oder zur Fernleitungsseite laufenden seriellen Bytes.

Das serielle Byte hat bei einer üblichen Bitrate von 2400 Bit/s eine zeitliche Länge von 4,6 ms; die Datenübergabe von fünf zeitlich aufeinanderfolgenden Bytes jeweils parallel erfolgt, z.B. bei Verwendung des Peripherie-Bausteines SAB 8255 in etwa 360 µs.

Entsprechend Fig. 1 sind die im Pufferspeicher enthaltenen Datenregister in zwei Peripherie-Bausteinen enthalten, mit denen die beiden Mikrocomputer versehen sind. Jeder der beiden Peripherie-Bausteine 81, 82 enthält je Übertragungsrichtung ein Register. Das Senderegister des einen ist jeweils mit dem Empfangsregister des anderen Mikrocomputers verbunden.

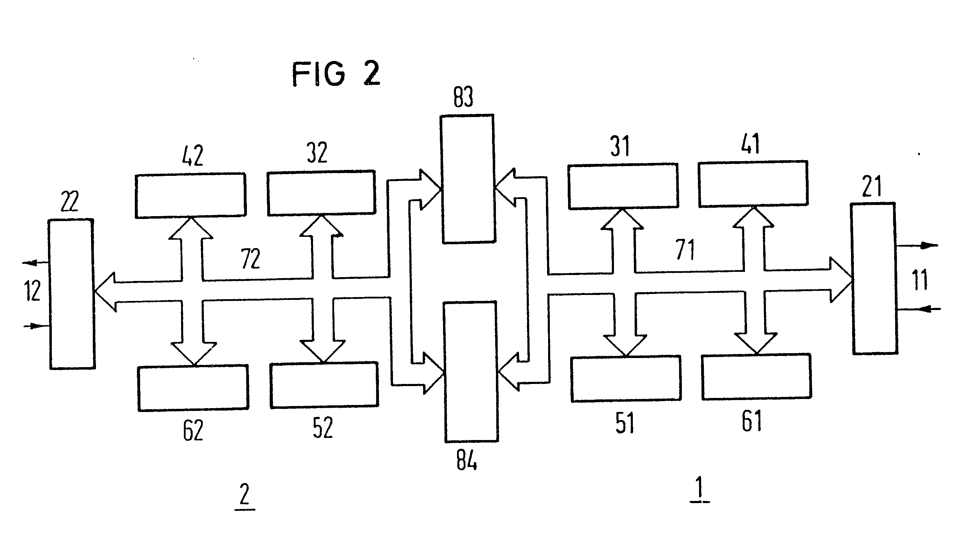

Entsprechend Fig. 2 sind die im Pufferspeicher enthaltenen Datenregister ebenfalls in zwei Peripherie-Bausteinen 83, 84 enthalten, mit denen die beiden Mikrocomputer versehen sind. Jeder der beiden Peripherie-Bausteine enthält für die Senderichtung ein Register.

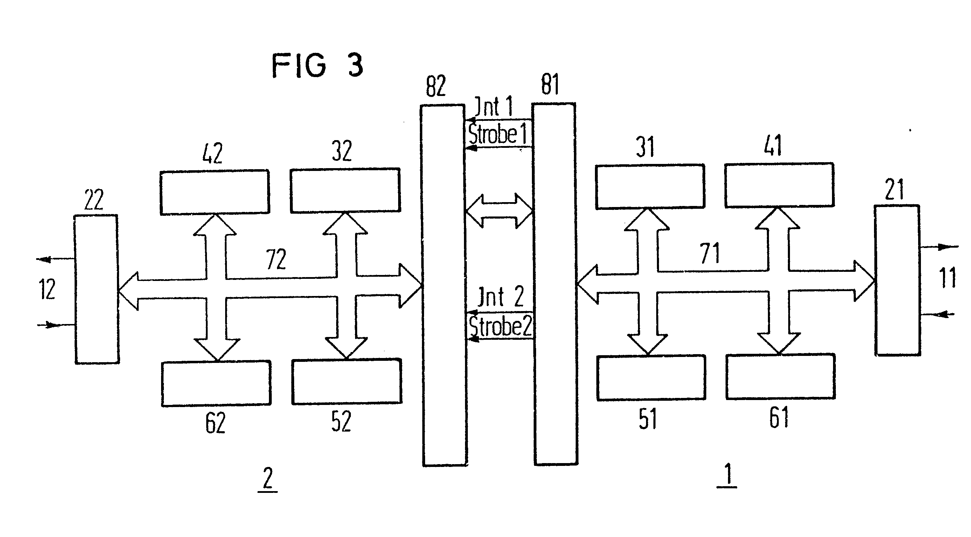

Auch nach Fig. 3 sind die im Pufferspeicher enthaltenen Datenregister in zwei Peripherie-Bausteinen 81, 82 enthalten, mit denen die Mikrocomputer versehen sind. Jeder der beiden Peripherie-Bausteine enthält ein Register. Ein Register des einen Peripherie-Bausteines ist mit einem Register des anderen Peripherie-Bausteines verbunden. Bei Datenübergabe vom Mikrocomputer 1 zum Mikrocomputer 2 ist das Register des Mikrocomputers 1 auf Senden und das Register des Mikrocomputers 2 auf Empfang gesteuert. Bei Datenübergabe vom Mikrocomputer 2 zum Mikrocomputer 1 ist das Register des Mikrocomputers 2 auf Senden und das Register des Mikrocomputers 1 auf Empfang gesteuert.

Der Mikrocomputer 1 dient insbesondere als Station bzw. Einrichtung zur Ablaufsteuerung in einer Fernwirkeinrichtung. Der Mikrocomputer 2, der zur Datenspeicherung und/oder zur Datenverarbeitung dient, ist zwischen der Station und einem Peripheriegerät angeordnet. Dabei können an die Stelle des Peripheriegeräts insbesondere Ein-Ausgabe-Elemente treten.

Stationen und Zentralen eines Fernwirksystems tauschen schnell und sicher Telegramme über grosse Entfernungen aus und koordinieren den Telegrammablauf. Die Daten der Telegramme wiederum werden an die Ein-Ausgabe-Elemente abgegeben und abgeholt.

Der zwischen Station und Ein-Ausgabe-Elementen angeordnete Mikrocomputer 2 empfängt die bitparallelen Daten aus der Station, speichert sie und gibt sie bitseriell an die Ausgabeelemente weiter. Zu geeigneter Zeit fragt er die Eingabeelemente bitseriell ab, speichert die Daten und gibt sie auf Abruf bitparallel an die Station weiter.

Dieser Datenaustausch zwischen einer Station und den Mikrocomputer 2 wird zwischen längeren Pausen sehr schnell durchgeführt, da zwischen den beiden Mikrocomputern eine parallele Datenübergabe vorgesehen ist. Der serielle Datenaustausch mit den Ein-Ausgabe-Elementen oder mit dem Prozessrechner bietet insbesondere bei relativ langen Anschlussleitungen Vorteile. Schon bei kleinem Abstand der Ein-Ausgabe-Elemente von der Station müsste eine parallele Datenübergabe sorgfältig gegen Störeinflüsse geschützt und eine aufwendige Verkabelung vorgesehen werden.

Eine weitere vorteilhafte Anwendung der Schaltungsanordnung besteht im Zusammenschalten zweier selbständiger Fernwirknetze. Hier werden zwei Mikrocomputer 2 auf der seriellen Seite miteinander verbunden, während die parallele Seite des ersten Mikrocomputers mit einer Station des ersten Fernwirknetzes verbunden ist und die parallele Seite des zweiten Mikrocomputers 2 mit der Zentrale des zweiten Fernwirknetzes verbunden ist. Dadurch ist ein ständiger Informationsaustausch zwischen den beiden Netzen gegeben.

Der Datenspeicher kann andererseits mit zwei 8-Bit-Adressschaltern versehen und so programmiert werden, dass er nur Telegramme weitergibt, deren vorzugsweise erstes Meldungsbyte dem Bitmuster der beiden Adressschalter entspricht. Bei unterschiedlicher Einstellung der Adressschalter werden die Telegramme weitergegeben, deren Bitmuster im ersten Meldungsbyte zwischen den beiden Adressschaltern liegt. Dieser Bandpasscharakter des Datenspeichers ist besonders vorteilhaft bei der Zusammenschaltung mehrerer selbständiger Fernwirknetze über Datenspeicher, wobei immer nur eine bestimmte Telegrammart von einem Netz ins andere laufen soll.

**Patentansprüche**

1. Schaltungsanordnung mit zwei Mikrocomputern, die über einen einen Pufferspeicher enthaltenden Bus-Koppler miteinander verbunden sind, wobei über den Bus-Koppler zwischen dem einen, zur Erzeugung und Auswertung von Fernwirktelegrammen dienenden Mikrocomputer (1) und dem anderen, insbesondere zur Datenverarbeitung dienenden Mikrocomputer (2) die mittels der Telegramme übertragenen oder zu übertragenden Daten austauschbar sind und wobei der zur Erzeugung und Auswertung von Fernwirktelegrammen dienende Mikrocomputer (1) mit einem Peripherie-Baustein (21) für eine serielle Übergabe der Fernwirktelegramme versehen ist, dadurch gekennzeichnet, dass an den anderen der beiden, zur Datenspeicherung und/oder Datenverarbeitung dienenden Mikrocomputer (2) ein Peripherie-Baustein (22) für eine serielle Ein- oder Ausgabe von Daten angeschlossen ist und dass der Pufferspeicher des Bus-Kopplers mit wenigstens einem Datenregister je Übertragungsrichtung ausgebildet ist und dass der zur Erzeugung und Auswertung von Fernwirktelegrammen dienende Mikrocomputer (1) den Zeitpunkt eines wortseriellen Datenaustausches über den Pufferspeicher sowohl in der einen als auch in der anderen Übertragungsrichtung bestimmt, wobei die Bitfolge der an den Peripherie-Bausteinen (21, 22) stattfindenden bitseriellen Übergabe der Daten derart bemessen ist, dass die Dauer eines seriellen Datenwortes bei bitserieller Übergabe grösser ist als die Dauer des wortseriellen Datenaustausches zwischen den Mikrocomputern (1, 2).

2. Schaltungsanordnung nach Anspruch 1, dadurch gekennzeichnet, dass bei dem wortseriellen Austausch der Daten zwischen den beiden Mikrocomputern (1, 2) Wortgruppen mit je einer vorgegebenen Zahl von zeitlich aufeinanderfolgenden Wörtern übergeben werden.

3. Schaltungsanordnung nach Anspruch 1 oder 2, dadurch gekennzeichnet, dass die im Pufferspeicher enthaltenen Datenregister in zwei Peripherie-Bausteinen (81, 82) enthalten sind, mit denen die beiden Mikrocomputer versehen sind, und dass jeder der beiden Peripherie-Bausteine je Übertragungsrichtung ein Register enthält und dass jeweils das Senderegister des einen mit dem Empfangsregister des anderen Mikrocomputers verbunden ist (Fig. 1).

4. Schaltungsanordnung nach Anspruch 1 oder 2, dadurch gekennzeichnet, dass die im Pufferspeicher enthaltenen Datenregister in zwei Peripherie-Bausteinen (83, 84) enthalten sind, mit denen die beiden Mikrocomputer versehen sind, und dass jeder der beiden Peripherie-Bausteine für die Senderichtung ein Register enthält (Fig. 2).

5. Schaltungsanordnung nach Anspruch 1 oder 2, dadurch gekennzeichnet, dass die im Pufferspeicher enthaltenen Datenregister in zwei Peripherie-Bausteinen (81, 82) enthalten sind, mit denen die Mikrocomputer versehen sind, und dass jeder der beiden Peripherie-Bausteine wenigstens ein Register enthält und dass ein Register des einen Peripherie-Bausteines mit einem Register des anderen Peripherie-Bausteines verbunden ist und dass bei Datenübergabe vom Mikrocomputer 1 zum Mikrocomputer 2 das Register des Mikrocomputers 1 auf Senden und das Register des Mikrocomputers 2 auf Empfang gesteuert ist und dass bei Datenübergabe vom Mikrocomputer 2 zum Mikrocomputer 1 das Register des Mikrocomputers 2 auf Senden und das Register des Mikrocomputers 1 auf Empfang gesteuert ist (Fig. 3).

6. Schaltungsanordnung nach einem der Ansprüche 1 bis 5, dadurch gekennzeichnet, dass bei Verwendung der Schaltungsanordnung als Station einer Fernwirkeinrichtung der bestimmende Mikrocomputer (1) zur Übertragungs-Ablaufsteuerung und der andere Mikrocomputer (2) zur Speicherung und Verarbeitung der empfangenen und/oder der auszusendenden Daten dient.

7. Schaltungsanordnung nach einem der Ansprüche 1 bis 6, dadurch gekennzeichnet, dass sie mit einer zweiten derartigen Schaltungsanordnung derart gekoppelt ist, dass die zur Datenspeicherung und/oder Datenverarbeitung dienenden Mikrocomputer (2) an ihren für eine serielle Ein- oder Ausgabe der Daten vorgesehenen Peripherie-Bausteinen (22) miteinander verbunden sind.

## Claims

1. A circuit arrangement comprising two microcomputers which are connected to one another via a bus-coupler which includes a buffer store, where the data which is transmitted or is to be transmitted by means of the telegrams can be exchanged via the bus-coupler between the first microcomputer (1) which serves to generate and analyse remote control telegrams and the other microcomputer (2) which serves in particular for data processing, and where the microcomputer (1) which serves to generate and analyse remote control telegrams is provided with a peripheral module (21) for the serial transmission of the remote control telegrams, characterised in that the other microcomputer (2) which serves for data storage and/or data processing is connected to a peripheral module (22) for serial input or output of data, and that the buffer store of the bus coupler is provided with at least one data register for each direction of transmission, and that the microcomputer (1) which serves to generate and analyse remote control telegrams determines the time of a word-serial data exchange via the buffer store both in the one direction of transmission and in the other direction of transmission, where the bit sequence of the bit-serial transmission of the data which takes place in the peripheral modules (21, 22) is contrived to be such that the duration of a serial data word in the bit-serial transmission is longer than the duration of the word-serial data exchange between the microcomputers (1, 2).

2. A circuit arrangement as claimed in claim 1, characterised in that for the word-serial exchange of data between the two microcomputers (1, 2) word groups which each include a predetermined number of consecutive words are transmitted.

3. A circuit arrangement as claimed in claim 1 or claim 2, characterised in that the data registers included in the buffer stores are arranged in two peripheral modules (81, 82) with which the two microcomputers are provided, and that each of the two peripheral modules includes one register for each direction of transmission, and that the respective transmitting register of the one microcomputer is connected to the respective receiving register of the other microcomputer (Fig. 1).

4. A circuit arrangement as claimed in claim 1 or claim 2, characterised in that the data registers included in the buffer store are arranged in two peripheral modules (83, 84) with which the two microcomputers are provided, and that each of the two peripheral modules comprises a register for the transmitting direction (Fig. 2).

5. A circuit arrangement as claimed in claim 1 or claim 2, characterised in that the data registers included in the buffer store are arranged in two peripheral modules (81, 82) with which the microcomputers are provided, and that each of the two peripheral modules comprises at least one register and that a register of the first peripheral module is connected to a register of the other peripheral module, and that when data is transferred from the microcomputer 1 to the microcomputer 2 the register of the microcomputer 1 is set for transmission and the register of the microcomputer 2 is set for reception, and that when data is transferred from the microcomputer 2 to the microcomputer 1 the register of the microcomputer 2 is set for transmission and the register for the microcomputer 1 is set for reception (Fig. 3).

6. A circuit arrangement as claimed in one of the claims 1 to 5, characterised in that when the circuit arrangement is used as a station of a remote control device, the leading microcomputer (1) serves to control the transmission flow and the other microcomputer (2) serves to store and process the received data and/or the data to be transmitted.

7. A circuit arrangement as claimed in one of the claims 1 to 6, characterised in that it is coupled to a second such circuit arrangement in such manner that the microcomputers (2) which serve for data storage and/or data processing are connected to one another by their peripheral modules (22) which are provided for the serial input or output of data.

## Revendications

1. Montage qui comporte deux micro-ordinateurs, qui sont reliés entre eux par l'intermédiaire d'un coupleur-bus, les données, transmises au moyen de messages ou à transmettre, étant échangeables, par l'intermédiaire du coupleur-bus entre l'un des micro-ordinateurs (1), qui sert à la production et à l'exploitation de messages téléconduits, et l'autre micro-ordinateur (2), qui sert notamment, au traitement des données, et le micro-ordinateur (1), qui sert à la production et à l'exploitation de messages téléconduits, étant pourvu d'un composant périphérique (21), destiné à un transfert du message téléconduit, caractérisé en ce que, à l'autre des deux micro-ordinateurs (2), qui sert à la mémorisation des données et/ou au traitement des données, est raccordé un composant périphérique (22), destiné à une introduction ou restitution, série, de données, que la mémoire tampon du coupleur-bus est formée d'au moins un registre de données par direction de transmission, et que le micro-ordinateur (1), servant à la production et à l'exploitation de messages téléconduits, défini, aussi bien dans une direction de transmission que dans l'autre, l'instant d'un échange de données, en série par mots, au moyen de la mémoire tampon, la séquence binaire du transfert des données, en série par bit, qui a lieu dans les composants périphériques (21, 22), étant dimensionnée de manière à ce que la durée d'un mot de données série, dans le cas d'un transfert en série par bit, soit plus grande que la durée d'un échange de données, en série par mot, entre les micro-ordinateurs (1, 2).

2. Montage selon la revendication 1, caractérisé en ce que, dans le cas de l'échange, en série et par mots, des données, entre les deux micro-ordinateurs (1, 2), des groupes de mots sont délivrés avec chacun un nombre prédéterminé de mots se succédant temporellement.

3. Montage selon la revendication 1 ou 2, caractérisé en ce que les registres de données contenus dans la mémoire tampon, sont contenus dans deux composants périphériques (81, 82), dont sont pourvus les deux micro-ordinateurs, que chacun des deux composants périphériques comprend un registre pour chaque direction de transmission, et que chaque registre d'émission de l'un est relié avec le registre de réception de l'autre micro-ordinateur (figure 1).

4. Montage selon la revendication 1 ou 2, caractérisé en ce que les registres de données, contenus dans la mémoire tampon, sont contenus dans deux composants périphériques (83, 84), dont sont pourvus les deux micro-ordinateurs, et que chacun des deux composants périphériques comprend un registre destiné à la direction d'émission (figure 2).

5. Montage selon la revendication 1 ou 2, caractérisé en ce que les registres de données, contenus dans la mémoire tampon, sont contenus dans deux composants périphériques (81, 82), dont sont pourvus les micro-ordinateurs, que chacun des deux composants périphériques comprend au moins un registre, qu'un registre de l'un des composants périphériques est relié à un registre de l'autre composant périphérique, que dans le cas d'un transfert de données du micro-ordinateur (1) au micro-ordinateur (2), le registre du micro-ordinateur (1) est réglé en émission et le registre du micro-ordinateur (2) est réglé en réception, et que dans le cas d'un transfert de données du micro-ordinateur (2) au micro-ordinateur (1), le registre du micro-ordinateur (2) est réglé en réception et le registre du micro-ordinateur (1) est réglé en émission (figure 3).

6. Montage selon l'une des revendications 1 à 5, caractérisé en ce que, dans le cas de l'utilisation du montage comme poste d'un dispositif téléconduit, le micro-ordinateur (1) déterminé, sert à la commande de déroulement des transmissions, et l'autre micro-ordinateur (2), sert à la mémorisation et au traitement des données émises et/ou à émettre.

7. Montage selon l'une des revendications 1 à 6, caractérisé en ce qu'il est couplé à un second montage de ce type, de manière à ce que les micro-ordinateurs, servant à la mémorisation de données et/ou au traitement des données, soient reliés entre eux par leurs composants périphériques (22) destinés à une introduction ou restitution, série, des données.

## FIG 1

82  81

Jnt 1
Strobe1

42  32  31  41

22  21

72  71

12  11

Jnt 2
Strobe2

62  52  51  61

2  1

0 060 932

# FIG 2

# FIG 3

0 060 932

## FIG 4

| BS | | | BSt | | | BA | | | BD1 | |
|---|---|---|---|---|---|---|---|---|---|---|

| ///// | | / | | • | • | • | • | • | • | • | + | + | + | + | + | + | + | + | ○ | ○ | ○ | ○ | ○ | ○ | ○ | ○ |

| BD 2 | | | BD3 | | | BD4 | | | BK | |
|---|---|---|---|---|---|---|---|---|---|---|

| ○ | ○ | ○ | ○ | ○ | ○ | ○ | ○ | ○ | ○ | ○ | ○ | ○ | ○ | ○ | ○ | ○ | ○ | ○ | ○ | ○ | ○ | × | × | × | × | × | × | × | × |

## FIG 5

## FIG 6

| BA | | | | | | | | |
|---|---|---|---|---|---|---|---|---|
| + | + | + | + | + | + | + | + | X |

| BD1 | | | | | | | | |
|---|---|---|---|---|---|---|---|---|
| ○ | ○ | ○ | ○ | ○ | ○ | ○ | ○ | X |

| BD2 | | | | | | | | |
|---|---|---|---|---|---|---|---|---|
| ○ | ○ | ○ | ○ | ○ | ○ | ○ | ○ | X |

| BD3 | | | | | | | | |
|---|---|---|---|---|---|---|---|---|
| ○ | ○ | ○ | ○ | ○ | ○ | ○ | ○ | X |

| BD4 | | | | | | | | |
|---|---|---|---|---|---|---|---|---|
| ○ | ○ | ○ | ○ | ○ | ○ | ○ | ○ | X |